# EUROPEAN PATENT SPECIFICATION

(11) **EP 2 088 882 B1**
(45) Date of publication and mention of the grant of the patent: **01.02.2017**
(21) Application number: 07852210.9
(22) Date of filing: 04.12.2007
(51) Int. Cl.: A41H 37/10, A41H 37/00

(54) **A METHOD OF FASTEN THREADS AT BUTTONS AND MEANS FOR MAKING THE SAME**
VERFAHREN ZUR BEFESTIGUNG VON FÄDEN AN KNÖPFEN UND HERSTELLUNGSMITTEL DAFÜR
PROCÉDÉ DESTINÉ À ATTACHER DES FILS À DES BOUTONS ET MOYEN DE FABRICATION ASSOCIÉ

(30) Priority: 07.12.2006 SE 0602624
(43) Date of publication of application: 19.08.2009
(73) Proprietor: Button Bind AB, 434 94 Vallda (SE)
(72) Inventor: PETERSSON, Bengt, 434 94 Vallda (SE)
(74) Representative: Cederbom, Hans Erik August
(86) International application number: PCT/SE2007/050938
(87) International publication number: WO 2008/069746

(56) References cited:
- US-A- 747 047
- US-A- 2 059 284
- US-A- 4 120 054
- US-A1- 2006 174 809

## Description

The present invention relates to a method of fastening and retaining sewing thread of sewed-on buttons in textiles and simultaneously forming a neck between the button and the textile.

Methods of fastening and retaining the sewing thread on sewed-on buttons, garments and other textiles so that the buttons do not come loose and that simultaneously form a soft neck between the button and the textile with a desired height are previously known. By, for instance, US 747,047 A, examples are shown of how a button is sewed on and a thread neck is formed. However, this manufacture is complicated and requires many threads, which also becomes expensive. The problem, which is well-known, that the buttons come loose in garments, for instance, outdoor clothes, shirts and blouses has also been solved in other ways. On the market, there is a system for, by means of a machine, winding a textile thread around the sewing thread that holds the button. That thread is partly of fusible material and requires a tool that is electrically heated but that may damage sensitive fabrics. That equipment is complicated and expensive, and requires much service. It means that the investment for the industry becomes so significant that the price of a garment increases considerably. Facing said shortcomings, the industry demands a simpler and safer as well as a more inexpensive system that does not require investment in an expensive equipment.

US 2006/0174809 A1 discloses a method and an apparatus for winding and knotting a thread around a sewing thread of a button for clothes so that a gap between the button and a suit, on which the button is sewn, is maintained. The winding and knotting thread forms firm knots of the thread around the sewing thread of the button and prevents the knots of the thread from being disentangled. Told method need an apparatus for told winding and knotting a thread around a sewing thread of a button. Such an apparatus is also complicated and expensive.

US 4,120,054A discloses a fastening assembly for fastening buttons to textile material using a plurality of heat sealable thread means for securing said buttons to respective portions of said textile material. Said thread-like material being heat sealed together by a specially heated welding tool. The heat sealable thread means being coated with or comprises a heat sealable plastic and also the vicinity of the portions of the yarn or thread being impregnated with a reinforcing plastic material to protect the textile material when heat sealing together the buttons to the textile material. Known assembly need a welding tool and the welded thread doesn't form a neck of thread.

US 747047A discloses means for securing buttons to fabrics.

US 2059284A discloses a method for manufacturing of an elastic soft-vulcanized rubber product, for example of thread rubber.

Therefore, the main object of the present invention is, among other things, to solve said problem in a simple, efficient and cost-saving way.

Said object is attained by means of a method according to the present invention that essentially is characterized in that a self-vulcanizing tape or thread is extended to approximately the double original length thereof and which then begins to self-vulcanize, and after that, the self-vulcanizing tape or thread is wound a number of turns around the sewing thread between the button and the textile, preferably the accumulation of sewing threads and the self-vulcanizing tape or thread, being pressed together for the formation of a soft neck.

An additional object of the invention is to provide means to be utilized when carrying out a said method.

By, among other things, US 1,909,455 A, it is previously known that rubber material that is allowed to vulcanize by simply acting on the material so that it is subjected to dimensional change, by pulling the material so that it is extended in relation to the original length thereof.

A said additional object is attained by means of means according to the present invention that essentially is characterized in that it comprises a tape or thread that consists of self-vulcanizing material and that is arranged to start the vulcanization upon tension load, and a tool that is arranged to be used to press together material into an even surface, preferably at room temperature, whereby the self-vulcanizing material is arranged to start the vulcanization immediately after it has been extended to the double length thereof, that the self-vulcanizing material is arranged to be completely vulcanized after approximately two hours, and that the tool consists of a hand tool in the form of a pair of pliers, the jaws of which have a height adapted to the desired intended button thread neck formed.

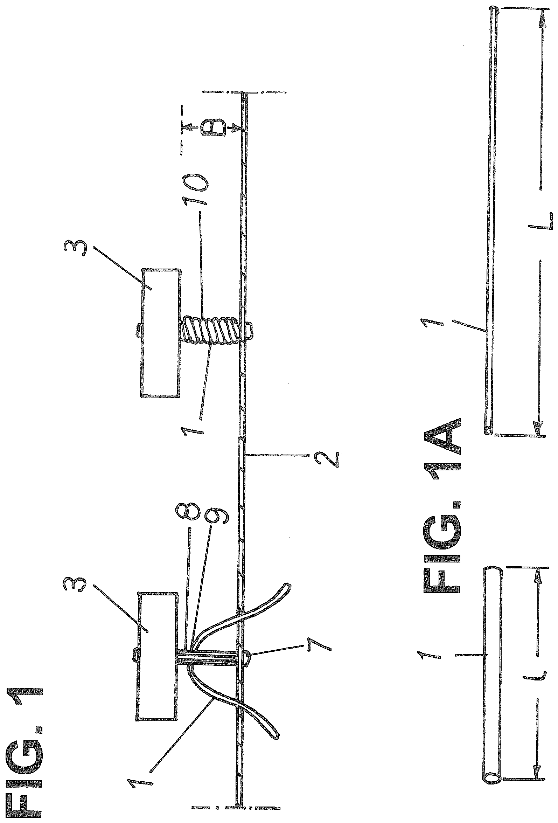

The invention is described in the following, reference being made to the accompanying drawings in which
Fig. 1 schematically shows the fastening of thread to a pair of buttons and at different stages,
Fig. 1A shows tape extension,

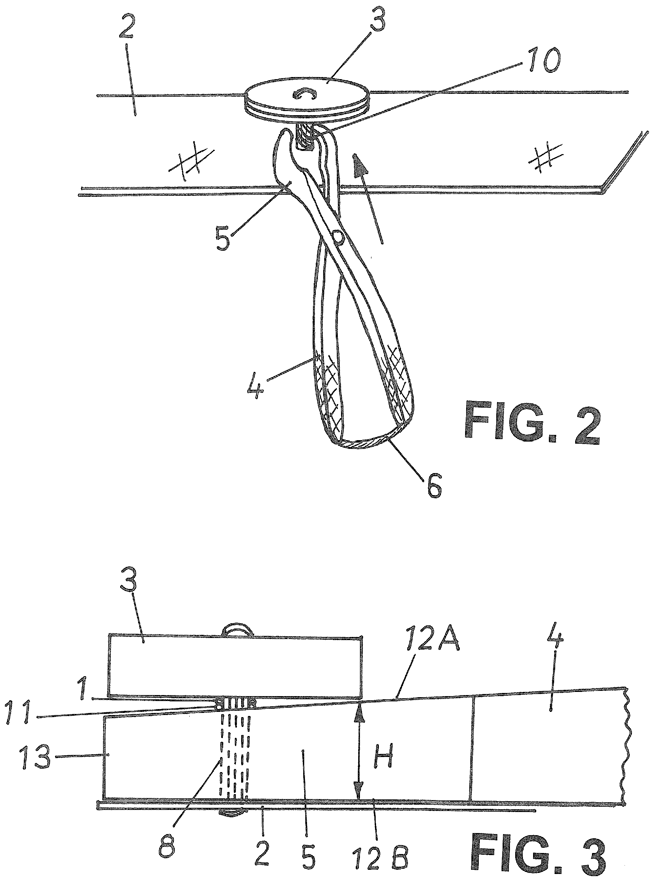

Fig. 2 shows a tool that is used upon the fastening of thread, and
Fig. 3 shows a section view of the jaw of the tool as an example.

The simple method according to the present invention does not require any complicated equipment but it is possible to manually wind the self-vulcanizing thread or tape around the sewing thread that holds the sewed-on button a few turns between the button and the textile in a second, and then by the hand tool, fast and efficiently shape the wound-on self-vulcanizing thread or tape into a soft neck. In addition, the method is suitable for tailors to easily secure the button fastening. The self-vulcanizing material in the tape or thread begins to self-vulcanize when the tape or thread is extended to approximately the double length thereof, which then, after the extension of the tape or thread to the double length thereof, is wound a few turns around the sewing thread that forms the neck between the button and the textile. Next, the tape or thread is torn off by a small manual force and then, by using the pliers-like tool, the wound-on remaining self-vulcanizing material is pressed together into a soft neck, which within approximately two hours has been vulcanized together. The buttons are thereby fixed without risking coming loose because of the thread would come undone. Garments that have been provided with buttons according to the new method can without problems be washed in 60 °C and tumble-dried. Thanks to a self-vulcanizing tape or thread that is wound around the sewing thread, the sewing thread does not unwind and the button thereby stays in place.

In more detail, a method of fastening and retaining a sewing thread 7 of sewed-on buttons 3 in textiles 2 and simultaneously for the formation of a neck 8 extending between the button 3 and the textile 2 comprises the extension of a self-vulcanizing tape or a thread 1 to approximately the double original length thereof from the length 1 to the length L, the tape/thread 1 then beginning to self-vulcanize. Next, the tape/thread 1 is wound a desired a number of turns around the sewing thread 7 and the thread neck 8 formed thereby between the sewed-on button 3 and the textile 2. Next, the accumulation 9 of sewing thread and self-vulcanizing tape, etc., 1 is preferably pressed together for the formation of a soft neck 10.

More precisely, the self-vulcanizing tape/thread 1 is wound around the sewing thread a few turns 11 directly after the tape/thread 1 has been pulled out to at least the double length thereof L in relation to the original length 1 thereof. Then, the accumulation 9 of sewing thread 7 and self-vulcanized tape/thread 1 is pressed together by means of a handheld tool 4, preferably a pair of tweezers or a pliers-like hand tool. The method may be effected entirely mechanically or manually or by a combination thereof. The accumulation 9 of sewing thread 7 and vulcanizing tape/thread 1 may, e.g., be pressed together using the fingers, but is most efficient to utilize a hand tool 4 or an automatic machine both for the vulcanization and for the pressing-together after automatic sewing on of a button in a machine where a desired distance B between the button 3 and the textile 2 is provided.

Means for carrying out a method of fastening and retaining sewing thread 7 for sewed-on buttons 3 in textiles 2 and simultaneously forming a soft neck 10 between the button 3 and the textile 2 comprises a tape or thread 1 that consists of a self-vulcanizing material, preferably a rubber material or the like, and that is arranged to start the vulcanization after tension load of the material. It preferably also comprises a tool 4 arranged to press together the material in question into an even surface, then, preferably at normal room temperature, e.g., between 20-30 °C or higher.

Said self-vulcanizing material in the tape/thread 1 is arranged to start the vulcanization immediately after it has been extended to at least the double length L thereof and that it is arranged to be completely vulcanized after approximately two hours.

The tool 4 in question consists of a hand tool 4 in the form of a pair of pliers, the jaws 5 of which have a height H adapted to the desired intended button thread neck 8 formed. At least one side 12, 12B of the jaws 5 of the pliers 4 has an inclined shape, converging toward the tip 13 thereof. Preferably, the jaws 5 of the pliers 4 are spring-force actuated 6 to be kept apart. The jaws 5 of the pliers 4 have a curved or plane shape, along the forming portion thereof, for instance crescent-shaped.

When the jaws 5 are pressed together by the hand tool 4 around the self-vulcanizing material in the tape or thread 1 located around the sewing thread 7 holding the button 3, then a soft neck 10 has thereby been provided and that holds the sewing thread 7 so that it cannot unwind and the button 3 comes loose.

Naturally, the invention is not limited to the embodiments described above and shown in the accompanying drawings. Modifications are feasible, particularly as for the nature of the different parts, or by using an equivalent technique, without departing from the protection area of the invention, such as it is defined in the claims.

## Claims

1. A method of fastening and retaining sewing thread (7) of sewed-on buttons (3) in textiles (2) and simultaneously forming a neck (8) between the button (3) and the textile (2), **characterized in that** a self-vulcanizing tape (1) or a thread (1) is extended to approximately the double (L) original length (1) thereof and which then begins to self-vulcanize, and after that, the self-vulcanizing tape (1) or thread (1) is wound a number of turns around the sewing thread (7) between the button (3) and the textile (2), preferably the accumulation of sewing thread (7) and the self-vulcanizing tape (1) or thread (1) being pressed together for the formation of a soft neck (10).

2. Method according to claim 1, **characterized in that** the self-vulcanizing tape (1) or thread (1) is wound around the sewing thread (7) a few turns (11) directly after the self-vulcanizing tape (1) or thread (1) is extended to the double length (L) thereof.

3. Method according to any one of the preceding claims, **characterized in that** the accumulation (9) of sewing thread (7) and self-vulcanizing tape/thread (1) is pressed together by means of a hand tool (4), preferably a pair of tweezers or a pliers-like tool (4).

4. A means for carrying out a method of fastening and retaining sewing thread (7) of sewed-on buttons (3) in textiles (2) and simultaneously forming a neck (10) between the button (3) and the textile (2) according to any one of the preceding claims, **characterized in that** it comprises a tape (1) or thread (1) that consists of self-vulcanizing material and that is arranged to start the vulcanization upon tension load, and a tool (4) that is arranged to be used to press together material into an even surface, preferably at room temperature, whereby the self-vulcanizing material is arranged to start the vulcanization immediately after it has been extended to the double length (L) thereof, that the self-vulcanizing material is arranged to be completely vulcanized after approximately two hours, and that the tool (4) consists of a hand tool (4) in the form of a pair of pliers (4), the jaws (5) of which have a height (H) adapted to the desired intended button thread neck (8) formed.

5. Means according to claim 4, **characterized in that** at least one side 12A, 12B of the jaws (5) of the pliers (4) has an inclined shape converging toward the tip (13) thereof.

6. Means according to any one of claims 4-5, **characterized in that** the jaws (5) of the pliers (4) are spring-force actuated (6) to be kept apart.

7. Means according to any one of claims 4-6, **characterized in that** the jaws (5) of the pliers (4) have a curved or plane shape.

## Patentansprüche

1. Verfahren zum Befestigen und Halten eines Nähfadens (7) von angenähten Knöpfen (3) in Textilien (2) und gleichzeitigem Formen eines Halses (8) zwischen dem Knopf (3) und der Textilie (2), **dadurch gekennzeichnet, dass** ein selbstvulkanisierendes Band (1) oder ein selbstvulkanisierender Faden (1) auf etwa seine doppelte (L) ursprüngliche Länge (I) ausgedehnt wird, der dann eine Selbstvulkanisation beginnt, und anschließend das selbstvulkanisierende Band (1) oder der selbstvulkanisierende Faden (1) in mehreren Windungen um den Nähfaden (7) zwischen dem Knopf (3) und der Textilie (2) gewickelt wird, wobei bevorzugt die Ansammlung von Nähfaden (7) und dem selbstvulkanisierenden Band (1) oder Faden (1) für die Formung eines weichen Halses (10) zusammengepresst wird.

2. Verfahren nach Anspruch 1, **dadurch gekennzeichnet, dass** das selbstvulkanisierende Band (1) oder der selbstvulkanisierende Faden (1) um den Nähfaden (7) mit einigen Windungen (11) direkt im Anschluss daran gewickelt wird, dass das selbstvulkanisierende Band (1) oder der selbstvulkanisierende Faden (1) auf seine doppelte Länge (L) verlängert ist.

3. Verfahren nach einem der vorhergehenden Ansprüche, **dadurch gekennzeichnet, dass** die Ansammlung (9) aus Nähfaden (7) und selbstvulkanisierendem Band/Faden (1) mittels eines Handwerkzeugs (4), bevorzugt einer Pinzette oder einem zangenartigen Werkzeug (4) zusammengepresst wird.

4. Mittel zum Ausführen eines Verfahrens zum Befestigen und Halten eines Nähfadens (7) von angenähten Knöpfen (3) in Textilien (2) und gleichzeitiges Formen eines Halses (10) zwischen dem Knopf (3) und der Textilie (2) nach einem der vorhergehenden Ansprüche, **dadurch gekennzeichnet, dass** es ein Band (1) oder einen Faden (1), der aus einem selbstvulkanisierenden Material besteht und so eingerichtet ist, bei Zuglast die Vulkanisation zu beginnen, und ein Werkzeug (4) umfasst, das so eingerichtet ist, dass es zum Zusammenpressen von Material in eine ebene Fläche bevorzugt bei Raumtemperatur verwendet werden kann, wodurch das selbstvulkanisierende Material so eingerichtet wird, dass es eine Vulkanisation ummittelbar im Anschluss daran beginnt, dass es auf seine doppelte Länge (L) ausgedehnt worden ist, dass das selbstvulkanisierende Material so eingerichtet ist, dass es nach etwa zwei Stunden vollständig vulkanisiert ist, und dass das Werkzeug (4) aus einem Handwerkzeug (4) in der Form einer Pinzette (4) besteht, wobei ihre Klauen (5) eine Höhe (H) besitzen, die an den gewünschten beabsichtigten Knopffadenhals (8), der geformt ist, angepasst sind.

5. Mittel nach Anspruch 4, **dadurch gekennzeichnet, dass** zumindest eine Seite (12A, 12B) der Klauen (5) der Zange (4) eine schräggestellte Form besitzt, die zu seiner Spitze (13) konvergiert.

6. Mittel nach einem der Ansprüche 4 bis 5, **dadurch gekennzeichnet, dass** die Klauen (5) der Zange (4) federkraftbetätigt (6) sind, um beabstandet gehalten zu werden.

7. Mittel nach einem der Ansprüche 4 bis 6, **dadurch gekennzeichnet, dass** die Klauen (5) der Zange (4) eine gekrümmte oder ebene Form besitzen.

## Revendications

1. Procédé destiné à attacher et retenir un fil à coudre (7) de boutons cousus (3) sur des textiles (2) et simultanément à former un col (8) entre le bouton (3) et le textile (2), **caractérisé en ce qu'**une bande auto-vulcanisante (1) ou un fil auto-vulcanisant (1) est étendu approximativement au double (L) de sa longueur d'origine (1) et qui ensuite commence à s'auto-vulcaniser, et après cela, la bande auto-vulcanisante (1) ou le fil auto-vulcanisant (1) est enroulé sur un certain nombre de tours autour du fil à coudre (7) entre le bouton (3) et le textile (2), de préférence l'accumulation de fil à coudre (7) et de la bande auto-vulcanisante (1) ou du fil auto-vulcanisant (1) étant comprimée pour la formation d'un col souple (10).

2. Procédé selon la revendication 1, **caractérisé en ce que** la bande auto-vulcanisante (1) ou le fil auto-vulcanisant (1) est enroulé autour du fil à coudre (7) sur plusieurs tours (11) directement après que la bande auto-vulcanisante (1) ou le fil auto-vulcanisant (1) a été étendu au double (L) de sa longueur.

3. Procédé selon l'une quelconque des revendications précédentes, **caractérisé en ce que** l'accumulation (9) de fil à coudre (7) et de bande auto-vulcanisante/fil auto-vulcanisant (1) est comprimée au moyen d'un outil manuel (4), de préférence une pincette ou un outil semblable à une pince.

4. Moyen destiné à réaliser un procédé destiné à attacher et retenir un fil à coudre (7) de boutons cousus (3) sur des textiles (2) et simultanément à former un col (10) entre le bouton (3) et le textile (2) selon l'une quelconque des revendications précédentes, **caractérisé en ce qu'**il comprend une bande (1) ou un fil (1) qui est constitué d'un matériau auto-vulcanisant et qui est agencé pour commencer la vulcanisation sous une charge de tension, et un outil (4) qui est agencé pour être utilisé pour comprimer un matériau en une surface régulière, de préférence à température ambiante, grâce à quoi le matériau auto-vulcanisant est agencé pour commencer la vulcanisation immédiatement après qu'il a été étendu au double (L) de sa longueur, **en ce que** le matériau auto-vulcanisant est agencé de manière à être totalement vulcanisé après approximativement deux heures, et **en ce que** l'outil (4) consiste en un outil manuel (4) sous la forme d'une pince (4), dont les mâchoires (5) ont une hauteur (H) adaptée au col de fil de bouton prévu souhaité (8) formé.

5. Moyen selon la revendication 4, **caractérisé en ce que** au moins un côté 12A, 12B des mâchoires (5) de la pince (4) présente une forme inclinée convergeant vers l'embout (13) de celle-ci.

6. Moyen selon l'une quelconque des revendications 4 et 5, **caractérisé en ce que** les mâchoires (5) de la pince (4) sont actionnées par une force de ressort (6) pour rester séparées.

7. Moyen selon l'une quelconque des revendications 4 à 6, **caractérisé en ce que** les mâchoires (5) de la pince (4) ont une forme courbe ou plane.
